(19) Europäisches Patentamt
European Patent Office
Office européen des brevets

(11) **EP 4 439 200 A1**

(12) **EUROPEAN PATENT APPLICATION**

(43) Date of publication:
**02.10.2024 Bulletin 2024/40**

(21) Application number: **23164974.0**

(22) Date of filing: **29.03.2023**

(51) International Patent Classification (IPC):
**G05B 13/04** (2006.01)

(52) Cooperative Patent Classification (CPC):
**G05B 13/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Honda Research Institute Europe GmbH**
**63073 Offenbach/Main (DE)**

(72) Inventors:
- **Schmitt, Thomas**
  **63073 Offenbach/Main (DE)**
- **Rodemann, Dr. Tobias**
  **63073 Offenbach/Main (DE)**

(74) Representative: **Beder, Jens**
**Mitscherlich PartmbB**
**Patent- und Rechtsanwälte**
**Karlstraße 7**
**80333 München (DE)**

(54) **COMPUTER-IMPLEMENTED METHOD FOR REPEATEDLY COMPUTING A CONTROL INPUT FOR A CONTROL OF A SYSTEM ACCORDING TO OBJECTIVES**

(57) The present invention provides a computer-implemented method for repeatedly computing a control input for a control of a system according to objectives. The method comprises computing, at a current time step, the control input according to the objectives using one or more Pareto fronts that were generated for computing, at one or more respective time steps before the current time step, the control input according to the objectives. The present invention further provides a data processing apparatus comprising means for carrying out the aforementioned method; a computer program comprising instructions which, when the program is executed by a computer, cause the computer to carry out the aforementioned method; and a computer-readable medium comprising instructions which, when executed by a computer, cause the computer to carry out the aforementioned method.

Figure 2

**Description**

The present invention relates to a computer-implemented method for repeatedly computing a control input for a control of a system according to objectives; a data processing apparatus comprising means for carrying out such method; a computer program comprising instructions which, when the program is executed by a computer, cause the computer to carry out such method; and a computer-readable medium comprising instructions which, when executed by a computer, cause the computer to carry out such method.

A first document "Schmitt, T. (2022). Multi-Objective Building Energy Management Optimization with Model Predictive Control. Darmstadt: Universitäts- und Landesbibliothek Darmstadt" discloses a multi-objective building energy management optimization with a model predictive control. A second document "Schmitt, T., Hoffmann, M., Rodemann, T., & Adamy, J. (2022). Incorporating Human Preferences in Decision Making for Dynamic Multi-Objective Optimization in Model Predictive Control. Inventions, 7, 46." discloses incorporating human preferences in decision making for dynamic multi-objective optimization in a model predictive control.

If multiple objectives are considered for controlling a system (i.e. considered in a control algorithm, e.g. model predictive control (MPC)), the solution to the multi-objective optimal control problem is (an approximation of) the Pareto front. The Pareto front is to be understood as the set of all Pareto optimal solutions. The term "Pareto solution" may be used as a synonym for the term "Pareto optimal solution". Namely, there is no single best solution, but an (infinite) number of 'optimal' compromises between the objectives. After the Pareto front is determined, a single Pareto optimal solution of the determined Pareto front is to be chosen as a control input for controlling the system. This is usually done by a user of the system, i.e. a human decision maker. However, this is not feasible for the use of real-time control, because a human would have to choose a new compromise e.g. every 30 minutes. This problem may be overcome by automatically choosing a Pareto optimal solution of the determined Pareto front according to simple mathematical metrics or other functions. In case the system to be controlled according to the objectives is a dynamic system the Pareto front has to be re-determined in order to ensure an optimal control of the system according to the objectives. The re-determination and selection of a single Pareto optimal solution of the re-determined Pareto front using simple mathematical metrics or other functions may lead to a high workload and, thus, usage of a lot of computation resources for the aforementioned computations. In addition, this re-determination of the Pareto front and, every time, selection of a single Pareto optimal solution of the re-determined Pareto front may be time consuming limiting a speed of control of the system.

In the light of the above, it is an object of the present invention to provide a computer-implemented method for repeatedly computing a control input for a control of a system according to objectives that mitigates the aforementioned disadvantages. It is in particular an object of the present invention to provide a computer-implemented method for repeatedly computing a control input for a control of a system according to objectives that allows reducing an amount of workload, reducing an amount of computation resources needed for repeatedly computing the control input (i.e. reducing necessary computational load) and/or reducing a time needed for repeatedly computing the control input.

These and other objects, which become apparent upon reading the following description, are solved by the subject-matter of the independent claims. The dependent claims refer to preferred embodiments of the invention

According to a first aspect of the invention, a computer-implemented method for repeatedly computing a control input for a control of a system according to objectives is provided. The method comprises computing, at a current time step, the control input according to the objectives using one or more Pareto fronts that were generated for computing, at one or more respective time steps before the current time step, the control input according to the objectives.

In other words, the first aspect of the present invention proposes using one or more past Pareto fronts, which were used in the past for computing the control input according to the objectives, for computing the control input according to the objectives for a current time step. This allows using solutions (e.g. Pareto optimal solution) for determining the control input that have been computed already in the past for determining at the current time step the control input. As a result, the amount of computation at the current time step, such as computing a new Pareto front at the current time step, for computing the control input at the current time step may be reduced. Therefore, the method of the first aspect allows reducing an amount of workload, reducing an amount of computation resources needed for repeatedly computing the control input (i.e. reducing necessary computational load) and/or reducing a time needed for repeatedly computing the control input.

A Pareto front is to be understood as the set of all Pareto optimal solutions. A Pareto front generated for computing the control input according to the objectives may be generated (i.e. computed) by solving a multi-objective optimal control problem with the objectives. The terms "multi-objective optimal control problem" and "multi-objective optimization problem" may be used as synonyms. The Pareto front may be generated by solving the multi-objective optimal control problem using one or more model dynamics and/or one or more constraints in addition to the objectives. For example, the Pareto front for computing the control input according to the objectives may be generated using a model predictive control (MPC) and the objectives and optionally at least one of model dynamic(s) and constraint(s) of the MPC may be used for formulating the optimal control problem of the MPC as a multi-objective optimal control problem. The Pareto front may comprise all solutions for the multi-objective optimal control problem. The control of the system may be a real-time control of the system. Generating or computing a Pareto front for computing the control input according to the objectives may comprise or may be approximating the Pareto front. In other words, computing the Pareto front may comprise or may be approximating the Pareto front.

The system may be a dynamic system. That is, conditions effecting the control of the system or how the system reacts to a control input may change over time. Such conditions may be referred to as disturbances of the system, i.e. disturbances of the system that effect the control of the system by the control input. The control input for controlling the system that is computed for a current time step may have an effect on how the state of the system at the current time step (i.e. before the control by the control input of the current time step) changes to a state of the system at the time step that is directly after the current time step (i.e. directly after the control by the control input of the current time step). Disturbances of the system may also have an effect on how the state of the system at the current time step changes to a state of the system at the time step that is directly after the current time step. The disturbances of the system may comprise or may be uncontrollable disturbance(s). Thus, the system may be described as a set of nonlinear ordinary difference equations:

$$x(k+1) = f\big(x(k), u(k), d(k)\big)$$

In the above equation, "k" may be the k-th time step (e.g. the current time step), "k+1" may be the k+1-th time step (e.g. the time step directly after the current time step), x(k) may be the state vector of the system at the k-th time step indicating the state of the system at the k-th time step (may be referred to as current state of the system at the time step k), u(k) may be the control input vector at the k-th time step indicating the control input computed at the k-th time, d(k) may be a vector of disturbances of the system at the k-th time step indicating the disturbances of the system at the k-th time step, and x(k+1) may be the state vector of the system at the k+1-th time step indicating the state of the system at the k+1-th time step.

The state of the system may be determined (e.g. measured) at every time step. The control input computed for a time step (considering the state of the system at the time step) may be used for controlling the system and the resulting state of the system may be determined (e.g. measured) again, and so on.

For example the system may be an energy management system (EMS), a charging control system e.g. for electric vehicles, or a chemical plant. The EMS may be an EMS of a building with storages, producers and consumers (may be referred to as "microgrid"). The EMS may be controlled according to e.g. amount of provided electricity and costs of provided electricity as two objectives). For example, disturbances of an EMS may comprise electricity demand of a building. The charging control system may be controlled according to e.g. charging speed and battery degradation (as two objectives). The chemical plant may be controlled according to e.g. product quality and costs (as two objectives).

The method comprises a repeating process, wherein the control input is iteratively computed at every time step. That is, the method comprises iteratively computing at respective time steps the control input for controlling the system. The time steps may be (e.g. fixed) time intervals at which the control input is computed (e.g. re-computed).

The passage "multiple objectives" or "two or more objectives" maybe used instead of the term "objectives". The objectives may be referred to as "control objectives". An objective may be understood as a characteristic or goal that is to be considered for controlling the system.

Optionally, the method comprises estimating whether a new Pareto front to be generated for computing, at the current time step, the control input according to the objectives and a past Pareto front that was generated for computing, at a time step directly before the current time step, the control input according to the objectives are similar by determining whether one or more criteria are fulfilled with regard to the new Pareto front and the past Pareto front.

The system may be described as a set of nonlinear ordinary difference equations, as outlined already above:

$$x(k+1) = f\big(x(k), u(k), d(k)\big),$$

In this case, a multi-objective optimal control problem with n objectives over a prediction horizon of $N_{\text{pred}}$ steps at the k-th time step (i.e. the time step *k)* may be described by

$$\min_{u(k), \dots, u(k+N_{\text{pred}}-1)} [J_1, \quad J_2, \quad \dots, \quad J_n]$$

s. t.

$$x(j + 1|k) = f\big(x(j|k), u(j|k), d(j|k)\big), \ \forall j = 0, \dots, N_{\text{pred}} - 1$$

$$x(0|k) = x_0$$

$$\underline{x} \leq x(k) \leq \overline{x}, \ \forall j = 0, \dots, N_{\text{pred}} - 1$$

$$\underline{u} \leq x(k) \leq \overline{u}, \ \forall j = 0, \dots, N_{\text{pred}} - 1$$

$$g\big(x(j|k), u(j|k), d(j|k)\big) \leq 0, \ \forall j = 0, \dots, N_{\text{pred}} - 1$$

$$h\big(x(j|k), u(j|k), d(j|k)\big) = 0, \ \forall j = 0, \dots, N_{\text{pred}} - 1$$

$$x\big(N_{\text{pred}}|k\big) = x_f.$$

The notation $r(j|k)$ refers to value of $r$ at time step $j + k$, predicted at the current time step $k$. $x_0$ is the measured (current) state. If the predicted disturbances do not change, then between two consecutive time steps $k$ and $k + 1$, the multi-objective optimization problem described above differs only by the different initial states $x(0|k)$ vs. $x(0|k + 1)$ and the disturbances $d(0|k)$ vs. $d(N_{\text{prea}} - 1|k + 1)$. Thus, the Pareto fronts computed for time steps $k$ and $k + 1$ may be very similar.

In other words, the estimation, whether the new Pareto front to be generated for computing, at the current time step, the control input according to the objectives and the past Pareto front, that was generated for computing, at a time step directly before the current time step, the control input according to the objectives are similar (enough), may be done in dependence of the initial state $x_0$ of the system (i.e. the state of the system at the current time step) and (predicted) disturbances of the system.

Optionally, machine learning techniques may be used to learn the forms of Pareto fronts (without learning the underlying control sequences) and use the learned Pareto front forms for estimating whether the new Pareto front to be generated for computing, at the current time step, the control input according to the objectives and the past Pareto front that was generated for computing, at a time step directly before the current time step, the control input according to the objectives are similar (enough).

For example, assuming an optimization problem with two objectives, (the approximation of) a Pareto front may comprise multiple individual Pareto optimal solutions (e.g. 30 Pareto optimal solutions). For example, the two objectives may be price and comfort. Each Pareto optimal solution may comprise merely a value for each of the two objectives, i.e. two objective values (e.g. price = 5 Euro, comfort = 1.23 units). The term "costs" may be used for the two objective values of each Pareto optimal solution. A control input sequence that leads to these costs (objective values) may comprise hundreds of variables (which are the actual result of the optimization), i.e. hundreds of optimal control input values. The effort for determining or learning the aforementioned hundreds of optimal control input values with a machine learning model is much greater compared to determining or learning merely the aforementioned costs (two objectives values) with a machine learning model. A machine learning technique may be used to learn the costs (objectives values) of all Pareto optimal solutions, which together are the form (in a geometric interpretation) of the Pareto front.

The Pareto optimal solutions to the optimization problem may mainly depend on the disturbances, the initial solution and the model dynamics itself. For describing the model dynamics the above described difference equation x(k+1)=f(x(k),u(k),d(k)) may be used. In this equation, u(k) represents the control input, which may be computed. The x(k+1) representing the state of the system at the time step k+1 may be computed, and x(k) representing the state of the system at the time step k may be computed within the prediction horizon. Optionally, for computing the state of the system x(k+1) at the time step k+1 merely f(x(k),u(k),d(k)) may be computed (e.g. evaluated) for every k in the prediction horizon and the computation results (e.g. evaluation results) may be summed up.

Optionally, a first criterion of the one or more criteria considers a difference between disturbances, on the control of the system by the control input, predicted at the current time step for a prediction horizon and disturbances, on the control of the system by the control input, predicted at the time step directly before the current time step for the prediction horizon, and the first criterion is fulfilled in case the difference is smaller than a threshold for the difference.

The difference and the threshold for the difference with regard to the first criterion may be referred to as "first difference" and "first threshold", respectively, in order to be distinguishable to other differences and thresholds described herein.

In other words, at the current time step k, differences in the optimal control problem with regard to the time step (k-1) directly before the current time step (k) may be compared.

An overlap of both prediction horizons may be from time step $k$ to $k + N_{pred}$ - 2.

Therein, it may be assumed that new states of the system and control inputs (e.g. control trajectory) may be similar to the previously predicted ones. Thus, the difference between the disturbances, on the control of the system by the control input, predicted at the current time step (k) for the prediction horizon and the disturbances, on the control of the system by the control input, predicted at the time step (k-1) directly before the current time step (k) for the prediction horizon (i.e. the difference of the influences of the disturbances of the system) may be estimated by the following equation

$$s_1(k) = \sum_{j=0}^{N_{pred}-2} f\big(x(j+1|k-1), \quad u(j+1|k-1), \quad d(j|k)\big)$$
$$- f\big(x(j+1|k-1), \quad u(j+1|k-1), \quad d(j+1|k-1)\big).$$

In case the system is linear, the following may be directly calculated $f(0, 0, d(j|k) - d(j+1|k-1))$. Furthermore, if the predicted disturbances do not change, the above equation $s_1(k)$ equals zero (i.e. $s_1(k) = 0$).

The first criterion may be fulfilled, in case the difference $s_1(k)$ is smaller than a threshold $C_{th1}$ for the difference ($s_1(k) < C_{th1}$). The aforementioned threshold $C_{th1}$ may be an application specific threshold.

Optionally, a second criterion of the one or more criteria considers a difference between disturbances, on the control of the system by the control input, predicted at the time step directly before the current time step for an initial time step of a prediction horizon and disturbances, on the control of the system by the control input, predicted at the current time step for a last time step of the prediction horizon, and the second criterion is fulfilled in case the difference is smaller than a threshold for the difference.

The difference and the threshold for the difference with regard to the second criterion may be referred to as "second difference" and "second threshold", respectively, in order to be distinguishable to other differences and thresholds described herein.

The difference between the disturbances, on the control of the system by the control input, predicted at the time step directly before the current time step for the initial time step of the prediction horizon and the disturbances, on the control of the system by the control input, predicted at the time step directly before the current time step for the last time step of the prediction horizon may be estimated by the following equation

$$s_2(k) = f\big(x(0|k-1), \quad u(0|k-1), \quad d(0|k-1)\big)$$
$$-f(x(N_{pred}|k-1), \, u(N_{pred}-1|k-1), \, d(N_{pred}-1|k)),$$

In the above equation, the disturbances, on the control of the system by the control input, predicted at the time step (k-1) directly before the current time step (k) for an initial time step of a prediction horizon may be represented by $d(0|k-1)$; and the disturbances, on the control of the system by the control input, predicted at the current time step (k) for the last time step of the prediction horizon may be represented by $d(N_{pred}-1|k)$.

While $x(N_{pred}|k-1)$ may be available, $u(N_{pred}|k-1)$ may not be available. Thus, it may be assumed that $u(N_{pred}-1|k-1) = u(N_{pred}|k-1)$. The control inputs may be optimized until the last time step $N_{pred-1}$ of the prediction horizon. With such optimized control input the state in the following time step $N_{pred}$ of the prediction horizon may be computed (e.g. using the model equation $x(k+1) = f(x(k), u(k), d(k))$).

The second criterion may be fulfilled, in case the difference $s_2(k)$ is smaller than a threshold $C_{th2}$ for the difference ($s_2(k) < C_{th2}$). The aforementioned threshold $C_{th2}$ may be an application specific threshold.

Optionally, a third criterion of the one or more criteria considers a difference between a state of the system at the current time step and a state of the system at a time step directly before the current time step that was used for generating the past Pareto front at the time step directly before the current time step, and the third criterion is fulfilled in case the difference is smaller than a threshold for the difference.

The difference and the threshold for the difference with regard to the third criterion may be referred to as "third difference" and "third threshold", respectively, in order to be distinguishable to other differences and thresholds described herein.

The difference between the state of the system at the current time step and the state of the system at the time step directly before the current time step that was used for generating the past Pareto front at the time step directly before the current time step may be estimated by the following equation

$$s_3(k) = C_x \cdot (x(k) - x(k-1))$$

In the above equation, $C_x$ is a constant factor; the state of the system at the current time step (k) may be represented by x(k), and the state of the system at the time step (k-1) directly before the current time step (k) that was used for generating the past Pareto front at the time step (k-1) directly before the current time step (k) may be represented by $x(k - 1)$.

The third criterion may be fulfilled, in case the difference $s_3(k)$ is smaller than a threshold $C_{th3}$ for the difference ($s_3(k) < C_{th3}$). The aforementioned threshold $C_{th3}$ may be an application specific threshold.

Optionally, the method comprises estimating that the new Pareto front and the past Pareto front are similar, in case a sum of the difference of the first criterion, the difference of the second criterion and the difference of the third criterion is smaller than a threshold for the sum.

The sum $s_{total}(k)$ of the difference of the first criterion, the difference of the second criterion and the difference of the third criterion may be represented by the following equation (e.g. overall estimation equation)

$$s_{total}(k) = s_1(k) + s_2(k) + s_3(k),$$

wherein $s_1(k)$, $s_2(k)$ and $s_3(k)$ are as outlined by the above equations.

The new Pareto front and the past Pareto front may be estimated to be similar, in case the sum $s_{total}(k)$ of the difference of the first criterion, the difference of the second criterion and the difference of the third criterion is smaller than a threshold $C_{th\_total}$ for the sum ($s_{total}(k) < C_{th\_total}$). In other words, the new Pareto front may be estimated to be similar enough with regard to the past Pareto front in case $s_{total}(k) < C_{th\_total}$. The new Pareto front may be estimated to deviate too much from the past Pareto front in case $s_{total}(k) \geq C_{th\_total}$. The threshold $C_{th\_total}$ for the sum may be an application specific threshold.

Optionally, the method comprises, in case the new Pareto front and the past Pareto front are estimated to be similar, computing, without computing the whole new Pareto front, as the control input for the current time step a Pareto optimal solution of the new Pareto front that is closest to a Pareto optimal solution of the past Pareto front that was used as the control input at the time step directly before the current time step.

In other words, in case the new Pareto front and the past Pareto front are estimated to be similar, it is not necessary to compute (e.g. approximate) an entire Pareto front for the current time step. This allows reducing the amount of workload, reducing the amount of computation resources needed for repeatedly computing the control input (i.e. reducing necessary computational load) and/or reducing the time needed for repeatedly computing the control input.

The past Pareto front may be a part of past Pareto fronts for which a user of the system has selected a Pareto optimal solution as the control input in the past. That is, the Pareto optimal solution of the past Pareto front that was used as the control input at the time step directly before the current time step may have been selected by the user. Each of the past Pareto fronts may be stored together with the Pareto optimal solution of the past Pareto front selected by the user as the control input. Each of the past Pareto fronts may be stored together with the Pareto optimal solution of the past Pareto front selected by the user as the control input on a server on which the method is performed, i.e. the application is running.

The past Pareto fronts and the respective used/selected Pareto optimal solutions of the past Pareto fronts may be learned using machine learning. In case the respective used/selected Pareto optimal solutions of the past Pareto fronts have been selected in the past by the user of the system, the aforementioned learning using machine learning allows learning preferences of the user of the system.

The computation (e.g. approximation) of the Pareto optimal solution of the new Pareto front that is closest to the Pareto optimal solution of the past Pareto front that was used as the control input at the time step directly before the current time step may depend on how the computation (e.g. approximation) of a Pareto front is done in general.

For example, it may be assumed that the Pareto front at the current time step, $P(k)$, is estimated to be similar enough to the past Pareto front $P^o = \{J^{o,1}, ... , J^{o,s_o}\}$ with $s_o$ different Pareto optimal solutions, wherein "J" represents a vector of the objectives. Further, it may be assumed that, from the past Pareto front $P^\circ$, the Pareto optimal solution $J^{o,r}$ was selected as the control input at the time step directly before the current time step. That is, the Pareto optimal solution $J^{o,r}$ of the past Pareto front $P^\circ$ was used as the control input at the time step directly before the current time step.

For example, if the past Pareto front $P^o$ has been computed with a weighted sum approach, the solution $J^{o,r}$ may correspond to a set of weights $w_r = [w_{1,r}, w_{2,r}, ... , w_{n,r}]$. Then, the multi-objective optimal control problem may directly be solved as a weighted sum with the weight set $w_r$. In other words, the Pareto optimal solution of the new Pareto front may be computed (without computing the whole new Pareto front) as the control input for the current time step as a weighted sum with the weight set $w_r$. If multiple sets of weights have led to the same Pareto solution (which is possible for knee points) the average of all these sets may be used for the computation, without computing the whole new Pareto front. Computing, without computing the whole new Pareto front, as the control input for the current time step the Pareto optimal solution of the new Pareto front may be referred to as "directly computing as the control input for the current time step the Pareto optimal solution of the new Pareto front".

For example , if a boundary intersection method (such as the Normal Boundary Intersection (NBI) method) has been used for computing the past Pareto front, the simplex and variation parameters which led to the Pareto optimal solution of the past Pareto front that was selected as the control input at the time step directly before the current time step may directly be re-used for computing, without computing the whole new Pareto front, as the control input for the current time step the Pareto optimal solution of the new Pareto front (that is closest to a Pareto optimal solution of the past Pareto front that was used as the control input at the time step directly before the current time step). For details one the aforementioned example, such as re-using the simplex and variation parameters, reference is made to section 4.2 of the above cited first document.

In the light of the above, using a weighted sum approach or a boundary intersection method (such as the Normal Boundary Intersection (NBI) method) allows directly re-using the parameters which led to the selected Pareto optimal solution, i.e. only a single optimization is done.

For example, if the past Pareto front has been computed using evolutionary algorithms, the information of an individual corresponding to the Pareto optimal solution of the past Pareto front that was selected as the control input at the time step directly before the current time step may be re-used, for example by generating a (smaller) population close around it and by setting constraints for the objective values in form of a box around the selected Pareto optimal solution.

Optionally, the method comprises computing, at the current time step, a new Pareto front according to the objectives for computing the control input according to the objectives, and computing a similarity value with regard to the computed new Pareto front for each of past Pareto fronts that were generated for computing, at respective time steps directly before the current time step, the control input according to the objectives.

In other words, a similarity value with regard to the computed new Pareto front for each of past Pareto fronts, which were generated in the past for computing the control input according to the objectives in the past, may be computed.

The similarity value computed for a past Pareto front may indicate how similar the computed new Pareto front is with regard to the past Pareto front. The greater the similarity value the more similar the new Pareto front and the past Pareto front and vice versa. The similarity value may be a value between zero and one or 0% and 100%, wherein zero or 0% indicates no similarity and one or 100% indicates identity (i.e. they are the same Pareto front). The term "similarity degree" may be used as a synonym for the term "similarity value".

Computing, at the current time step, the new Pareto front may be performed, in case the new Pareto front and the past Pareto front are estimated to be not similar. In other words, in case the new Pareto front and the past Pareto front are estimated to be not similar, a multi-objective optimization problem with regard to the objectives may be solved for the current time step, i.e. the new Pareto front may be computed (e.g. approximated) at the current time step.

The past Pareto fronts may be past Pareto fronts for which a user of the system has selected a Pareto optimal solution as the control input. Each of the past Pareto fronts may be stored together with the Pareto optimal solution of the past Pareto front selected by the user as the control input. Each of the past Pareto fronts may be stored together with the Pareto optimal solution of the past Pareto front selected by the user as the control input on a server on which the method is performed, i.e. the application is running.

Optionally, the aforementioned computation of the similarity value with regard to the computed new Pareto front for each of the past Pareto fronts may comprise the following steps: Normalizing and interpolating the new Pareto front and the past Pareto fronts; and computing the similarity value with regard to the normalized and interpolated new Pareto front for each of the normalized and interpolated past Pareto fronts.

With regard to computing a similarity value with regard to the computed new Pareto front for each of the past Pareto fronts that were generated for computing, at respective time steps directly before the current time step, the control input according to the objectives, the new Pareto front may be represented by $"P(k)"$, and the past Pareto fronts may be represented by $\{P^1, ..., P^{N_{fronts}}\}$, wherein it may be assumed that $N_{fronts}$ is an integer greater or equal to one indicating the amount of past Pareto fronts for which a respective similarity value with regard to the new Pareto front is computed.

Optionally, the new Pareto front, which may be represented by $P(k) = \{J^{k,1}, ... J^{k,s_k}\}$, is normalized such that each objective is in the range between zero and one (0 and 1), wherein the normalized Pareto front may be represented by $\tilde{P}(k) = \{\tilde{J}^{k,1}, ..., \tilde{J}^{k,s_k}\}$.

For example this may be done by

$$\tilde{J}_i^{k,r} = \frac{J_i^{k,r} - J_i^{k,\mathrm{utopia}}}{J_i^{k,\mathrm{nadir}} - J_i^{k,\mathrm{utopia}}}$$

with

$$J_i^{k,\mathrm{utopia}} = \operatorname*{argmin}_{J^{k,j} \in P(k)} J_i^{k,j}, \qquad J_i^{k,\mathrm{nadir}} = \operatorname*{argmax}_{J^{k,j} \in P(k)} J_i^{k,j}.$$

The symbol "J" is a vector of values of the objectives (according to which the control input is computed). Thus, it represents a Pareto optimal solution. The first superscript "k" of the symbols "J" of the set $\{J^{k,1}, \ldots, J^{k,s_k}\}$ refers to the Pareto front at the time step k (may be referred to as k-th Pareto front). The second superscript after the comma of the symbols "J" of the set $\{J^{k,1}, \ldots, J^{k,s_k}\}$ (i.e. 1 to $s_k$) represents an index of the Pareto optimal solutions of the respective Pareto front (i.e. of the k-th Pareto front), wherein $s_k$ represents the number of Pareto optimal solutions of the respective Pareto front (i.e. of the k-th Pareto front). For example, the symbol "$J^{k,1}$" represents a first Pareto optimal solution of the $s_k$ Pareto optimal solutions of the Pareto front at time step k, and the symbol "$J^{k,s_k}$" represents the last Pareto optimal solution (i.e. the $s_k$-th Pareto optimal solution) of the $s_k$ Pareto optimal solutions of the Pareto front at time step k.

Accordingly, the symbol "$\tilde{J}$" is a vector of normalized values of the objectives (according to which the control input is computed). Thus, it represents a normalized Pareto optimal solution. The first superscript "k" of the symbols "$\tilde{J}$" of the set $\{\tilde{J}^{k,1}, \ldots, \tilde{J}^{k,s_k}\}$ refers to the normalized Pareto front at time step k (may be referred to as k-th Pareto front). The second superscript after the comma of the symbols "$\tilde{J}$" of the set $\{\tilde{J}^{k,1}, \ldots, \tilde{J}^{k,s_k}\}$ (i.e. 1 to $s_k$) represents an index of the normalized Pareto optimal solutions of the respective normalized Pareto front (i.e. of the k-th normalized Pareto front), wherein $s_k$ represents the number of normalized Pareto optimal solutions of the respective normalized Pareto front (i.e. of the k-th normalized Pareto front). For example, the symbol "$\tilde{J}^{k,1}$" represents a first normalized Pareto optimal solution of the $s_k$ normalized Pareto optimal solutions of the normalized Pareto front at time step k, and the symbol "$\tilde{J}^{k,s_k}$" represents the last normalized Pareto optimal solution (i.e. the $s_k$-th normalized Pareto optimal solution) of the $s_k$ normalized Pareto optimal solutions of the normalized Pareto front at time step k.

The symbol "$J^{k,r}$" represents the r-th Pareto optimal solution of the Pareto front at time step k (may be referred to as Pareto front k). The symbol "$J_i^{k,r}$" represents the i-th objective value of the corresponding Pareto optimal solution (which is a vector). The tilde "~" above the symbol "J" means that the value has been normalized to a range between 0 and 1. The symbol "$J^{k,\mathrm{utopia}}$" represents the Utopia point of the Pareto front at time step k. This is no real Pareto optimal solution, because it cannot be achieved. Instead, it comprises combining all individual best values. It lies below the Pareto front at the time step k. The symbol "$J^{k,\mathrm{nadir}}$" represents a point that is opposite to the Utopia point. It comprises combining all individual worst values of the Pareto optimal solutions of the Pareto front at the time step k. It lies above the Pareto front at the time step k.

Optionally, the normalized new Pareto front $\tilde{P}$ may be interpolated on an (n - 1)-dimensional grid, wherein the interpolated normalized Pareto front may be represented by "$\overline{P}$". The symbol "n" is an integer greater than or equal to two ($n \geq 2$) that represents the number of objectives according to which the method may compute the control input for the control of the system. A grid with a resolution of $r_{\mathrm{grid}}$ between [0,1] along the (n - 1) dimensions may be used. For example the resolution of the grid may equal to 0.05, while having 3 objectives ($r_{\mathrm{grid}}$ = 0.05, and 3 objectives), which would result in 20 · 20 = 400 grid points (i.e. $\left(\frac{1}{0.05}\right)^{n-1}, n = 3$).

Then, any interpolation method which supports (n - 1) dimensions may be used. For example, assuming that the control input for the control of the system is computed according to three objectives (i.e. n = 3), the interpolation method may be a bilinear interpolation.

In case the number of objectives is greater than or equal to three ($n \geq 3$), the Pareto optimal solutions of the Pareto front do not necessarily cover all grid points. Optionally, no extrapolation is done for grid points which are outside of the Pareto optimal solutions of the Pareto front. Namely, optionally all values $\overline{J}_n^{k,j}$ for which any $\overline{J}_i^{k,j} > \max_{\tilde{J}^{k,r}} \tilde{J}_i^{k,r}$, $i \in \{1, \ldots, (n - 1)\}$, are to be set to one (1).

The line "-" above the symbol "J" means that this is an interpolated value (not a real Pareto optimal solution which has been determined). The first superscript k of the symbol "$\overline{J}_n^{k,j}$" refers to the Pareto front at time step k, i.e.

" $\bar{J}_n^{k,j}$ " is an (interpolated) Pareto optimal solution of the Pareto front at time step k. The second superscript of the symbol " $\bar{J}_n^{k,j}$ " refers to the j-th (interpolated) Pareto optimal solution of the Pareto front at time step k. The subscript "n" of the symbol " $\bar{J}_n^{k,j}$ " refers to the objective, i.e. "$J_n$" means the value of objective n of the Pareto optimal solution J.

Alternatively, extrapolation may be allowed; or the values may be set to $\infty$. Then, if any first Pareto front (e.g. the computed new Pareto front) has a solution 'outside' of the range of any second Pareto front (e.g. a past Pareto front), the first Pareto front and the second Pareto are not considered to be similar, i.e. the similarity value computed for the second Pareto front with regard to the first Pareto front may equal zero.

Optionally, the past Pareto fronts may also be normalized and interpolated according to the above description of normalizing and interpolating.

Optionally, the similarity value $f_{sim}(\bar{P}(k), \bar{P}^i)$ with regard to the computed new Pareto front, $P(k)$, for each past Pareto front, $P^i$, i = 1, ..., $N_{fronts}$}, of the past Pareto fronts, {$P^1$, ..., $P^{N_{fronts}}$}, may be computed using the normalized sum of the Euclidean distances

$$f_{\text{sim}}\big(\bar{P}(k), \bar{P}^i\big) = 1 - \frac{1}{r_{\text{grid}}^{n-1}} \sum_{j_1=1}^{1/r_{\text{grid}}} \cdots \sum_{j_{n-1}=1}^{1/r_{\text{grid}}} |\bar{J}_n^k(j_1, ..., j_{n-1}) - \bar{J}_n^i(j_1, ..., j_{n-1})|$$

In the above equation, "$\bar{P}(k)$" represents the normalized and interpolated new Pareto front, and "$\bar{P}^i$" represents the i-th normalized and interpolated past Pareto front of the past Pareto fronts.

The passage " $\bar{J}_n^k(j_1, ..., j_{n-1})$ " is the interpolated value of objective n, of the Pareto front k, at the grid position "$j_1$, ..., $j_{n-1}$". It is an optional alternative for specifying a specific solution (Pareto optimal solution) of the Pareto front at the time step k. In this optional case, a grid of Pareto optimal solutions is considered (the solutions are not merely numbered). That is, the possible values of all (interpolated) Pareto optimal solution for the objectives 1, ..., n-1 may be known (because they are the grid points that may be chosen). The value for the n-th objective may vary. The passage "'($j_1$, ..., $j_{n-1}$)" may be written as "($j_1 r_{grid}$, ..., $j_{n-1} r_{grid}$)", which may be the actual values. The previously stated is accordingly true for the passage " $\bar{J}_n^i(j_1, ..., j_{n-1})$ " referring to the interpolated value of objective n, of the Pareto front i, at the grid position "$j_1$, ..., $j_{n-1}$" (to which the current Pareto front P(k) may be compared).

Optionally, in case it is desired to consider the Pareto fronts' ranges, two values for representing the similarities of the Pareto fronts widths and extreme values may be used.

Optionally, a similarity value equaling to one ($f_{sim}$ = 1), means that the new Pareto front and the past Pareto front for which the similarity is computed are identical. The similarity value equaling to one may be the upper limit. The lower limit of the similarity value, $f_{sim}$, may depend on how the extrapolated values are treated when interpolating a respective normalized Pareto front.

Optionally the method comprises, in case a similarity value of a past Pareto front that is greatest among similarity values of the past Pareto fronts is greater than or equal to a threshold for the similarity value, selecting as the control input for the current time step a Pareto optimal solution of the new Pareto front that is closest to a Pareto optimal solution of the past Pareto front that was used as the control input at a respective time step before the current time step.

Selecting as the control input for the current time step the Pareto optimal solution of the new Pareto front that is closest to the Pareto optimal solution of the past Pareto front that was used as the control input at the respective time step before the current time step allows making a decision from the new Pareto front, i.e. choosing a single Pareto optimal solution of the new Pareto front.

In other words, the best similarity value among the similarity values of the past Pareto fronts may be compared to the threshold for the similarity value and it may be determined whether the best similarity value is greater than or equal to the threshold for the similarity value. This may be represented by the following

$$\max_i f_{\text{sim}}\big(\bar{P}(k), \bar{P}^i\big) > th_{\text{sim}}.$$

The threshold for the similarity value may equal for example 0.95 ($th_{sim}$ = 0.95).

Selecting as the control input for the current time step a Pareto optimal solution of the new Pareto front that is closest to a Pareto optimal solution of the past Pareto front that was used as the control input at a respective time step before the current time step may be computed using the absolute Euclidean distance, which may be represented by

$$\tilde{J}^{k,\mathrm{use}} = \underset{\tilde{J}^l \in \tilde{P}(k)}{\mathrm{argmin}} \,|\, \tilde{J}^l - \tilde{J}^{i,\mathrm{chosen}} \,|$$

The symbol "$\tilde{J}^{k,\mathrm{use}}$" is the (normalized) Pareto optimal solution of the current Pareto front k, which is to be used (e.g. automatically selected). The symbol "$\tilde{J}^l$" is any (normalized) Pareto optimal solution of the current (normalized) Pareto front $\tilde{P}(k)$. The symbol "$\tilde{J}^{i,\mathrm{chosen}}$" is the former chosen (normalized) solution of the past Pareto front i (i.e. $P^i$).

That is, if there is a similar enough past Pareto front $P^i$, then its former chosen Pareto optimal solution $J^{i,\mathrm{chosen}} \in P^i$ may be used to choose a Pareto optimal solution from the new Pareto front $P(k)$. Namely, the (normalized) Pareto optimal solution of the new Pareto front $P(k)$ which minimizes a distance function to the (normalized) former chosen Pareto optimal solution $\tilde{J}^{i,\mathrm{chosen}}$ may be chosen.

Each of the past Pareto fronts may be stored together with the respective Pareto optimal solution of the past Pareto front (i.e. the respective Pareto optimal solution of the past Pareto front that was used as the control input at a respective time step before the current time step). Each of the past Pareto fronts may be stored together with the respective Pareto optimal solution of the past Pareto front (i.e. the respective Pareto optimal solution of the past Pareto front that was used as the control input at a respective time step before the current time step) on a server on which the method is performed, i.e. the application is running.

In the light of the above, the method of the first aspect allows reducing the amount of times for a user of the system to be involved in finding the control input for controlling the system. In case the Pareto optimal solutions of the past Pareto fronts that were used in the past have been selected by the user of the system, the method allows that an Pareto optimal solution selected by the method fits with the user preferences for selecting Pareto optimal solutions as the control input.

Optionally, the method comprises, in case the similarity value computed for each of the past Pareto fronts is smaller than a threshold for the similarity value, demanding a user of the system to select a Pareto optimal solution of the new Pareto front as the control input for the current time step.

Demanding the user of the system to select a Pareto optimal solution of the new Pareto front as the control input for the current time step allows making a decision from the new Pareto front, i.e. choosing a single Pareto optimal solution of the new Pareto front.

The term "(human) decision maker" may be used for referring to the user of the system. The new Pareto front may be presented to the user via a respective interface, such as a web interface, for demanding the user to select the Pareto optimal solution of the new Pareto front as the control input for the current time step.

Optionally, the method comprises storing the new Pareto front and the selected Pareto optimal solution together.

This allows using the new Pareto front and the selected Pareto optimal solution for future references, i.e. computing the control input at future time steps. The method may comprise storing the new Pareto front and the selected Pareto optimal solution together with the value of the current time step. The new Pareto front and the selected Pareto optimal solution may be stored together on a server on which the method is performed, i.e. the application is running.

Optionally, the method comprises, in case no selection of the Pareto optimal solution by the user is obtained within a time frame, selecting as the control input for the current time step a Pareto optimal solution of the new Pareto front that is closest to a Pareto optimal solution of a past Pareto front that was used as the control input at a respective time step before the current time step, wherein the similarity value of the past Pareto front is closest to the threshold for the similarity value.

The method of the first aspect may be performed by a control entity for controlling the system. The control entity may be configured to generate the control input using the method of the first aspect for controlling the system. The control entity may be implemented by software and/or hardware. The control entity may be configured to communicate with the user of the system, e.g. using a screen. The control entity may be an entity with regard to its function. That is the control entity may be distributed among two or more locations. The control entity may be for example a server, wherein optionally the server may be distributed among multiple machine(s) and/or instance(s).

In order to achieve the computer-implemented method according to the first aspect of the present invention, some or all of the above described optional features may be combined with each other.

According to a second aspect of the invention, a data processing apparatus is provided. The data processing apparatus comprises means for carrying out the computer-implemented method according to the first aspect of the present invention.

According to a third aspect of the invention, a computer program is provided. The computer program comprises instructions which, when the program is executed by a computer, cause the computer to carry out the computer-implemented method according to the first aspect of the present invention. The term "computer program product" may be used as a synonym for the term "computer program".

According to a fourth aspect of the invention, a computer-readable medium is provided. The computer-readable medium comprises instructions which, when executed by a computer, cause the computer to carry out the computer-implemented method according to the first aspect of the present invention. The term "computer-readable storage medium" may be used as a synonym for the term "computer-readable medium". The computer-readable medium may be a non-transitory storage medium.

The data processing apparatus according to the second aspect, the computer program according to the third aspect, and the computer-readable medium according to the fourth aspect each achieve the same advantages as the computer-implemented method according to the first aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which

**Figure 1**    shows an example of a computer-implemented method according to an embodiment of the present invention for repeatedly computing a control input for a control of a system according to objectives;

**Figure 2**    shows an example of an implementation of the computer-implemented method of Figure 1; and

**Figure 3**    shows an example of an implementation of a step of the computer-implemented method of Figure 2.

In the Figures, corresponding elements have the same reference signs.

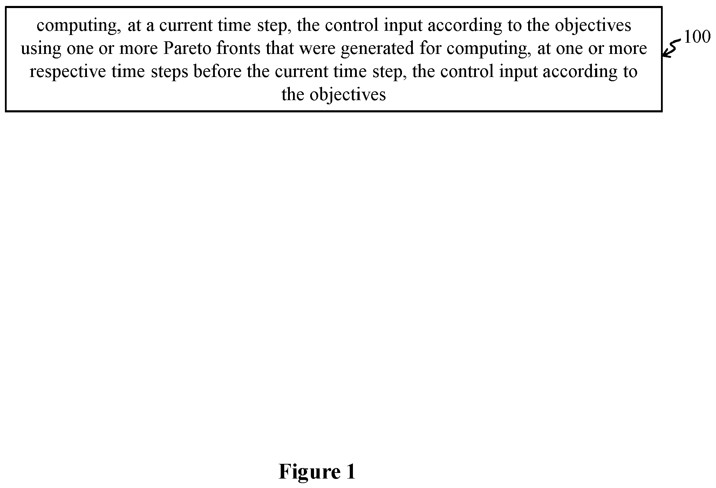

**Figure 1** shows an example of a computer-implemented method according to an embodiment of the present invention for repeatedly computing a control input for a control of a system according to objectives. The method of Figure 1 is an example of the method according to the first aspect of the present invention. The description of the method according to the first aspect of the present invention is correspondingly valid.

The method of Figure 1 is a computer-implemented method for repeatedly computing a control input for a control of a system according to objectives. The method comprises the step 100 of computing, at a current time step, the control input according to the objectives using one or more Pareto fronts that were generated for computing, at one or more respective time steps before the current time step, the control input according to the objectives

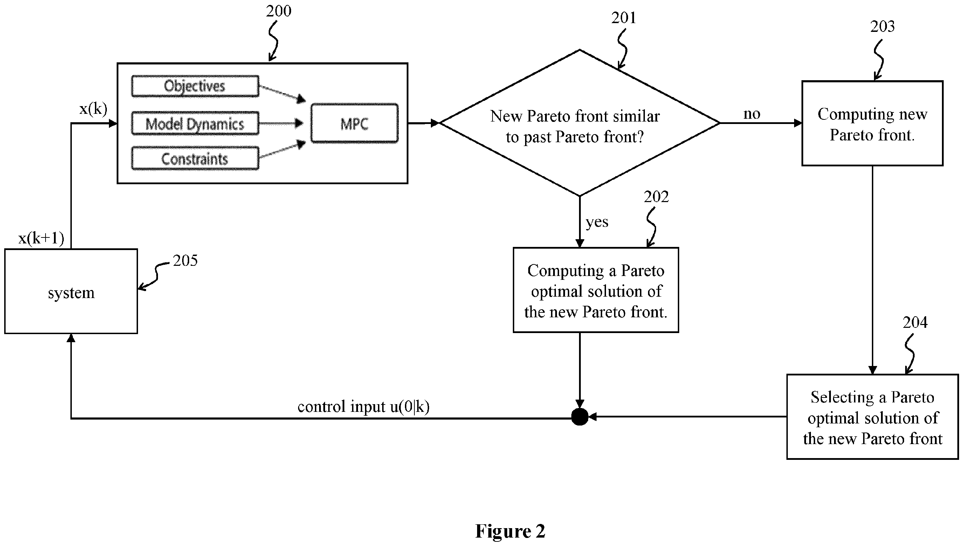

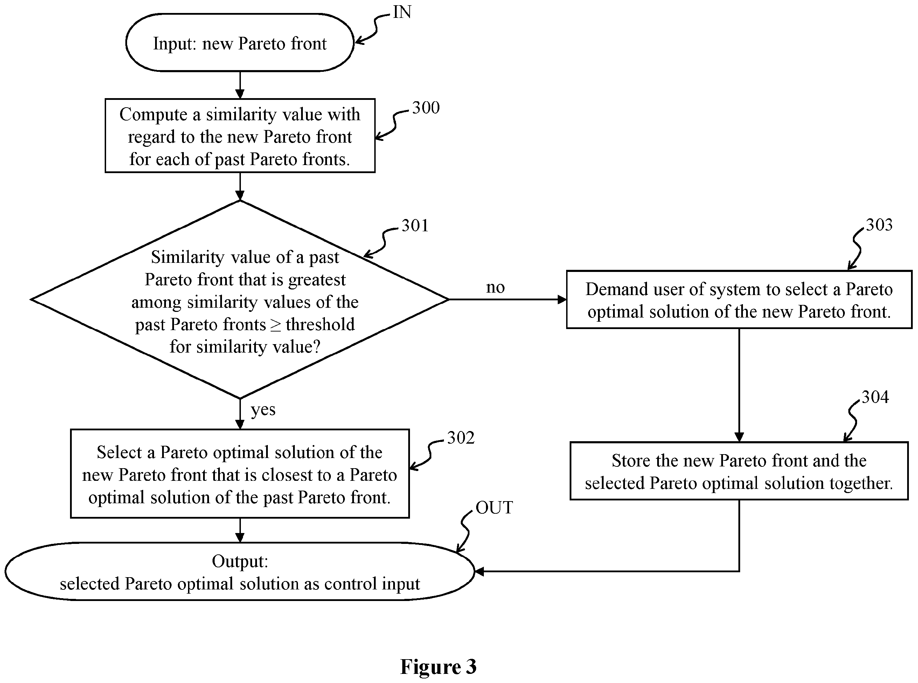

For further information on the method of Figure 1 reference is made to the description of the method according to the first aspect of the present invention and the description of Figures 2 and 3.

**Figure 2** shows an example of an implementation of the computer-implemented method of Figure 1. The description of the method of Figure 1 is correspondingly valid for the method of Figure 2.

As shown in Figure 2, for a current time k the state of the system x(k) may be determined. The box 200 indicates that a Pareto front generated for computing the control input for controlling the system according to objectives may be generated (i.e. computed) by solving a multi-objective optimal control problem with the objectives. The box 200 however does not indicate that for the current time k the Pareto front is actually computed. As indicated in the box 200, the Pareto front may be generated by solving the multi-objective optimal control problem using one or more model dynamics and/or one or more constraints in addition to the objectives. Further, as indicated in the box 200, the Pareto front for computing the control input according to the objectives may be generated using for example a model predictive control (MPC).

In a first step 201 of the method of Figure 2, it is estimated whether a new Pareto front to be generated for computing, at the current time step k, the control input according to the objectives and a past Pareto front that was generated for computing, at a time step k-1 directly before the current time step k, the control input according to the objectives are similar. This may be done by determining whether one or more criteria are fulfilled with regard to the new Pareto front and the past Pareto front. For more details on this, reference is made to the corresponding description of the method according to the first aspect of the invention.

In case the aforementioned new Pareto front and the aforementioned past Pareto front are similar (enough), i.e. "yes" at step 201, the step 202 may be performed. In case the aforementioned new Pareto front and the aforementioned past Pareto front are not similar (enough), i.e. "no" at step 201, the step 203 may be performed. In the step 202, as the control input for the current time step k, a Pareto optimal solution of the new Pareto front that is closest to a Pareto optimal solution of the past Pareto front that was used as the control input at the time step directly before the current time step is computed, without computing the whole new Pareto front. That is, in step 202, the whole new Pareto front is not computed.

In the step 203, the new Pareto front for computing the control input according to the objectives is computed according to the objectives. In a step 204 following the step 203, a Pareto optimal solution of the new Pareto front is selected as the control input for the current time step k. For more details on the step 204 reference is made to the description of Figure 3. The control input for the current time step, computed by the step 202 or the steps 203 and 204, may be represented by "$u(0|k)$". In a next step 205, the control input for the current time step k may be applied for controlling the system. As a result of this control the state of the system may change resulting in the state x(k+1) of the system at the time step k+1 directly after the current time step k. The above described steps of the method may be repeated for the time step k+1 directly after the current time k and every following time step.

For further information on the method of Figure 2, in particular the steps of the method, reference is made to the description of the method according to the first aspect of the present invention and the description of Figure 3.

**Figure 3** shows an example of an implementation of a step of the computer-implemented method of Figure 2. The description of the method of Figure 2 is correspondingly valid for the method of Figure 3.

Figure 3 shows an example of an implementation of the step 204 of the method of Figure 2. As indicated in Figure 3, the input IN is the new Pareto front computed for the current time step k (computed in the step 203 of the method of Figure 2). In a first step 300, a similarity value with regard to the computed new Pareto front for each of past Pareto fronts, which were generated for computing, at respective time steps directly before the current time step k, the control input according to the objectives, is computed. In a next step 301, it is determined whether a similarity value of a past Pareto front that is greatest among similarity values of the past Pareto fronts is greater than or equal to a threshold for the similarity value. In case the aforementioned is true (i.e. "yes" at step 301), the step 302 may be performed, otherwise (i.e. "no" at step 301), the step 303 may be performed.

In the step 301, as the control input for the current time step k, a Pareto optimal solution of the new Pareto front that is closest to a Pareto optimal solution of the past Pareto front (for which the greatest similarity value was computed in step 301) that was used as the control input at a respective time step before the current time step is selected. In step 303, a user of the system is demanded to select a Pareto optimal solution of the new Pareto front as the control input for the current time step k. In an optional step 304 following the step 303, the new Pareto front and the selected Pareto optimal solution may be stored together.

Thus, as indicated in Figure 3 either the step 302 or the step 303 may lead to a Pareto optimal solution that is selected from the new Pareto front (provided as input IN) as the control input for the current time step k. This selected Pareto optimal solution is the output OUT of the method of Figure 3 and, thus, of the step 204 of the method of Figure 2.

For further information on the method of Figure 3, in particular the steps of the method, reference is made to the description of the method according to the first aspect of the present invention.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A computer-implemented method for repeatedly computing a control input for a control of a system according to objectives, wherein the method comprises

   - computing (100), at a current time step, the control input according to the objectives using one or more Pareto fronts that were generated for computing, at one or more respective time steps before the current time step, the control input according to the objectives.

2. The computer-implemented method according to claim 1, wherein the method comprises

   - estimating (202) whether a new Pareto front to be generated for computing, at the current time step, the control input according to the objectives and a past Pareto front that was generated for computing, at a time step directly before the current time step, the control input according to the objectives are similar by determining whether one or more criteria are fulfilled with regard to the new Pareto front and the past Pareto front.

3. The computer-implemented method according to claim 2, wherein

   - a first criterion of the one or more criteria considers a difference between disturbances, on the control of the system by the control input, predicted at the current time step for a prediction horizon and disturbances, on the control of the system by the control input, predicted at the time step directly before the current time step for the prediction horizon, and
- the first criterion is fulfilled in case the difference is smaller than a threshold for the difference.

4. The computer-implemented method according to claim 2 or 3, wherein

- a second criterion of the one or more criteria considers a difference between disturbances, on the control of the system by the control input, predicted at the time step directly before the current time step for an initial time step of a prediction horizon and disturbances, on the control of the system by the control input, predicted at the current time step for a last time step of the prediction horizon, and
- the second criterion is fulfilled in case the difference is smaller than a threshold for the difference.

5. The computer-implemented method according to any one of claims 2 to 4, wherein

- a third criterion of the one or more criteria considers a difference between a state of the system at the current time step and a state of the system at a time step directly before the current time step that was used for generating the past Pareto front at the time step directly before the current time step, and
- the third criterion is fulfilled in case the difference is smaller than a threshold for the difference.

6. The computer-implemented method according to claims 3 to 5, wherein the method comprises

- estimating that the new Pareto front and the past Pareto front are similar, in case a sum of the difference of the first criterion, the difference of the second criterion and the difference of the third criterion is smaller than a threshold for the sum.

7. The computer-implemented method according to any one of claims 2 to 6, wherein the method comprises

- in case the new Pareto front and the past Pareto front are estimated to be similar, computing (203), without computing the whole new Pareto front, as the control input for the current time step a Pareto optimal solution of the new Pareto front that is closest to a Pareto optimal solution of the past Pareto front that was used as the control input at the time step directly before the current time step.

8. The computer-implemented method according to any one of the previous claims, wherein the method comprises

- computing (204), at the current time step, a new Pareto front (IN) according to the objectives for computing the control input according to the objectives, and
- computing (300) a similarity value with regard to the computed new Pareto front (IN) for each of past Pareto fronts that were generated for computing, at respective time steps directly before the current time step, the control input according to the objectives.

9. The computer-implemented method according to claim 8, wherein the method comprises

- in case a similarity value of a past Pareto front that is greatest among similarity values of the past Pareto fronts is greater than or equal to a threshold for the similarity value, selecting (302) as the control input for the current time step a Pareto optimal solution of the new Pareto front that is closest to a Pareto optimal solution of the past Pareto front that was used as the control input at a respective time step before the current time step.

10. The computer-implemented method according to claim 8 or 9, wherein the method comprises,

- in case the similarity value computed for each of the past Pareto fronts is smaller than a threshold for the similarity value, demanding (303) a user of the system to select a Pareto optimal solution of the new Pareto front as the control input for the current time step.

11. The computer-implemented method according to claim 10, wherein the method comprises

- storing (304) the new Pareto front and the selected Pareto optimal solution together.

12. The computer-implemented method according to claim 10, wherein the method comprises

- in case no selection of the Pareto optimal solution by the user is obtained within a time frame, selecting as the control input for the current time step a Pareto optimal solution of the new Pareto front that is closest to a Pareto optimal solution of a past Pareto front that was used as the control input at a respective time step before the current time step, wherein the similarity value of the past Pareto front is closest to the threshold for the similarity value.

13. A data processing apparatus comprising means for carrying out the computer-implemented method according to any one of claims 1 to 12.

14. A computer program comprising instructions which, when the program is executed by a computer, cause the computer to carry out the computer-implemented method according to any one of claims 1 to 12.

15. A computer-readable medium comprising instructions which, when executed by a computer, cause the computer to carry out the computer-implemented method according to any one of claims 1 to 12.

computing, at a current time step, the control input according to the objectives using one or more Pareto fronts that were generated for computing, at one or more respective time steps before the current time step, the control input according to the objectives

$\sim$100

**Figure 1**

EP 4 439 200 A1

**Figure 2**

```
                        ┌──────────────────────────┐
                        │   Input: new Pareto front │ ⟍ IN
                        └──────────────────────────┘
                                   │
                                   ▼
                ┌──────────────────────────────┐
                │ Compute a similarity value with │ ⟍ 300
                │  regard to the new Pareto front │
                │   for each of past Pareto fronts. │
                └──────────────────────────────┘
                                   │
                                   ▼
```

Similarity value of a past
Pareto front that is greatest
among similarity values of the   ⟍ 301
past Pareto fronts ≥ threshold
for similarity value?

no → Demand user of system to select a Pareto   ⟍ 303
optimal solution of the new Pareto front.

yes

Select a Pareto optimal solution of the   ⟍ 302
new Pareto front that is closest to a Pareto
optimal solution of the past Pareto front.

Store the new Pareto front and the   ⟍ 304
selected Pareto optimal solution together.

OUT

Output:
selected Pareto optimal solution as control input

**Figure 3**

Europäisches
Patentamt

European
Patent Office

Office européen
des brevets

# EUROPEAN SEARCH REPORT

Application Number

**EP 23 16 4974**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 420 931 A (NAT UNIV DEFENSE TECHNOLOGY PLA) 21 September 2021 (2021-09-21) * paragraphs [0012], [0032], [0057] * ----- | 1-15 | INV. G05B13/04 |
| X | HAOMIN MA ET AL: "An intelligent voltage control system Training, learning and controlling", INTELLIGENT SYSTEM APPLICATION TO POWER SYSTEMS (ISAP), 2011 16TH INTERNATIONAL CONFERENCE ON, IEEE, 25 September 2011 (2011-09-25), pages 1-6, XP032011102, DOI: 10.1109/ISAP.2011.6082256 ISBN: 978-1-4577-0807-7 * pages 1,4,5 * ----- | 1-7,11, 13-15 | |

| | | | TECHNICAL FIELDS SEARCHED (IPC) |
|---|---|---|---|
| | | | G05B |

The present search report has been drawn up for all claims

| Place of search | Date of completion of the search | Examiner |
|---|---|---|
| The Hague | 6 September 2023 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 4974

This annex lists the patent family members relating to the patent documents cited in  the above-mentioned European search report.
The members are as contained in the European Patent Office EDP file on
The European Patent Office is in no way liable for these particulars which are merely given for the purpose of information.

06-09-2023

| Patent document cited in search report | | Publication date | Patent family member(s) | Publication date |
|---|---|---|---|---|
| CN 113420931 | A | 21-09-2021 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHMITT, T.** Multi-Objective Building Energy Management Optimization with Model Predictive Control. Universitäts- und Landesbibliothek Darmstadt, 2022

- **SCHMITT, T. ; HOFFMANN, M. ; RODEMANN, T. ; ADAMY, J.** Incorporating Human Preferences in Decision Making for Dynamic Multi-Objective Optimization in Model Predictive Control. *Inventions,* 2022, vol. 7, 46